# EUROPÄISCHE PATENTSCHRIFT

(11) **EP 0 959 283 B1**
(45) Veröffentlichungstag und Bekanntmachung des Hinweises auf die Patenterteilung: **25.09.2002**
(21) Anmeldenummer: 98108961.8
(22) Anmeldetag: 16.05.1998
(51) Int. Cl.: F16K 35/00, F16K 1/32

(54) **Ventil**
Valve
Soupape

(43) Veröffentlichungstag der Anmeldung: 24.11.1999
(73) Patentinhaber: ARI-ARMATUREN ALBERT RICHTER GmbH & Co.KG., 33758 Schloss Holte-Stukenbrock (DE)
(72) Erfinder: Klusmann, Lothar, 33617 Bielefeld (DE); Lüke, Heinz, 33758 Schloss Holte-Stukenbrock (DE); Gerold, Hans-Jürgen, 33609 Bielefeld (DE); Koch, Hans-Werner, 33161 Hövelhof (DE)
(74) Vertreter: Stracke, Alexander, Dipl.-Ing.

(56) Entgegenhaltungen:
- EP-A- 0 651 190
- US-A- 1 656 555
- US-A- 2 234 052
- US-A- 3 456 679

## Beschreibung

Die vorliegende Erfindung betrifft ein Ventil gemäß dem Oberbegriff des Anspruchs 1.

Um zu verhindern, daß das Ventil unbeabsichtigt verstellt wird, kann das Handrad durch eine Feststellschraube arretiert werden
Dabei greift sie in eine umlaufende Ringnut ein, die in einem Mutterteil, das mit dem Handrad verbunden ist und durch das eine Spindel zum Öffnen und Schließen des Ventils axial bewegbar ist.

Das Einbringen einer Gewindebohrung für die Feststellschraube ist nur mit einem zusätzlichen Fertigungsaufwand möglich, der zu einer Verteuerung der Herstellung führt. Dieser Nachteil ist vor allem deshalb bemerkenswert, weil es sich bei solchen Ventilen um Massenartikel handelt.

Der vorliegenden Erfindung liegt daher die Aufgabe zugrunde, ein Ventil der gattungsgemäßen Art so zu gestalten, daß dessen Handrad mit einfacher und kostengünstiger herzustellenden Mitteln festsetzbar ist.

Diese Aufgabe wird durch ein Ventil gelöst, das die Merkmale des Anspruchs 1 aufweist.

Diese konstruktive Ausgestaltung erlaubt, daß auf den Einsatz einer Feststellschraube verzichtet werden kann.
Nur durch geringfügige, die Herstellungskosten nicht wesentlich steigernde Maßnahmen ist es möglich, den Schmiernippel in seiner Funktionsfähigkeit einer Feststellschraube anzupassen.

Hierzu ist es beispielsweise erforderlich, den Gewindeschaft des Schmiernippels entsprechend länger auszubilden, so daß dieser im Fall der Arretierung des Handrades in die Ringnut eingreifen kann.

Um die Standzeit des Ventils zu erhöhen, ist es überdies sinnvoll, den Schmiernippel aus einem entsprechend verschleißfesten Material herzustellen.

Weitere vorteilhafte Ausgestaltungen der Erfindung sind in den Unteransprüchen gekennzeichnet.

Ein Ausführungsbeispiel der Erfindung wird nachfolgend anhand der beigefügten Zeichnung beschrieben.

Die einzige Figur zeigt ein erfindungsgemäßes Ventil in einem Längsschnitt.

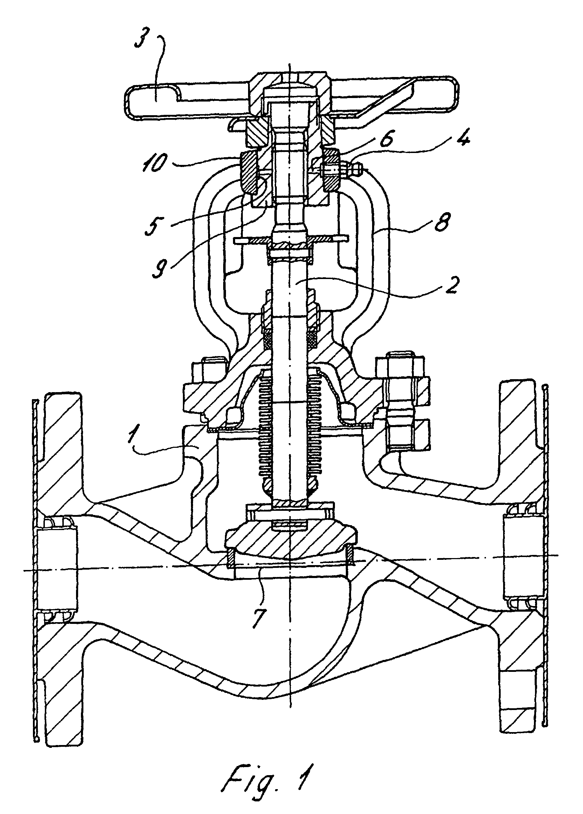

In der Figur 1 ist ein Ventil dargestellt, das ein Gehäuse 1 aufweist, in dem ein Ventilabschlußkörper 7 angeordnet ist, mit dem das Ventil absperrbar ist.

Dieser Ventilabschlußkörper 7 mit Drosselfunktion ist über eine Spindel 2 betätigbar, die mit einem Mutterteil 9 in Wirkverbindung steht, das über ein Handrad 3 drehbar ist. Hierdurch wird die Spindel 2 axial bewegt.

Das Mutterteil 9 ist in einer Buchse 10 drehbar gelagert, die Bestandteil eines Haltebügels 8 ist, der fest mit dem Gehäuse 1 verbunden ist.

In die Buchse 10 ist ein Schmiernippel 4 eingeschraubt, der in eine Ringnut 5 mündet, die in dem Mutterteil 9 vorgesehen ist. Von dieser Ringnut 5 erstreckt sich eine Schmierbohrung 6 bis zum Gewindeteil der Gewindespindel 2.

Der Gewindeschaft des Schmiernippels 4 ist länger als die Wandung der Buchse 10 dick ist. Wird der Schmiernippel 4 vollständig eingedreht, so ragt er in die Ringnut 5 und klemmt so das Mutterteil 9.

Hierdurch wird das Handrad 3 arretiert, so daß eine unbeabsichtigte Verstellung der Spindel 2 nicht möglich ist.

Zum Lösen der Arretierung des Handrades 3 ist lediglich ein teilweises Herausschrauben des Schmiernippels 4 erforderlich, bis das Mutterteil 9 sich frei drehen kann.

Die Funktionsfähigkeit des Schmiernippels 4 bleibt zu jedem Zeitpunkt, auch in Arretierstellung des Handrades, erhalten, da der freie Schmiermittelaustritt über eine Rille in der Ringnut 5 gewährleistet ist.

Da der Schmiernippel 4 nach der Erfindung auch die Funktion einer Feststellschraube übernimmt, kann auf deren Verwendung verzichtet werden.

### Bezugszeichenliste

- 1: Gehäuse
- 2: Spindel
- 3: Handrad
- 4: Schmiernippel
- 5: Ringnut
- 6: Schmierbohrung
- 7: Ventilabschlußkörper
- 8: Haltebügel
- 9: Mutterteil
- 10: Buchse

## Patentansprüche

1. Ventil, mit einer über ein Handrad (3) und ein Mutterteil (9) axial bewegbaren Spindel (2), mit der das Ventil zu öffnen und zu schließen ist, und einem in eine Buchse (10) eines Haltebügels (8) eingeschraubten und in das Mutterteil (9) mündenden Schmiernippel (4), über den ein Schmiermittel in den Gewindebereich zwischen dem Mutterteil (9) und der Spindel (2) bringbar ist, **dadurch gekennzeichnet, daß** das Mutterteil (9) mittels des Schmiernippels (4) verdrehsicher festsetzbar ist.

2. Ventil nach Anspruch 1, **dadurch gekennzeichnet, daß** die Länge des Gewindeschaftes des Schmiernippels (4) länger ist als die Dicke der Wandung der Buchse (10).

3. Ventil nach Anspruch 1, **dadurch gekennzeichnet, daß** der Schmiernippel (4) aus einem verschleißfesten Material besteht.

4. Ventil nach Anspruch 1, **dadurch gekennzeichnet, daß** der Schmiernippel (4) in eingeschraubter Endstellung an das Mutterteil (9) angepreßt ist.

## Claims

1. Valve having a spindle (2), which can be moved axially via a hand wheel (3) and a nut part (9) and by means of which the valve can be opened and closed, and having a lubricating nipple (4) which is screwed into a bushing (10) of a retaining bracket (8), opens out into the nut part (9) and via which a lubricant can be introduced into the threaded region between the nut part (9) and the spindle (2), **characterized in that** the nut part (9) can be secured in a rotationally fixed manner by means of the lubricating nipple (4).

2. Valve according to Claim 1, **characterized in that** the length of the threaded shank of the lubricating nipple (4) is greater than the thickness of the wall of the bushing (10).

3. Valve according to Claim 1, **characterized in that** the lubricating nipple (4) consists of a wear-resistant material.

4. Valve according to Claim 1, **characterized in that**, in the screwed-in end position, the lubricating nipple (4) is pressed onto the nut part (9).

## Revendications

1. Soupape comprenant une tige (2) axialement mobile grâce à une roue actionnable manuellement (3) et à un écrou (9), tige qui permet d'ouvrir et de fermer la soupape, et comprenant un raccord fileté de lubrification (4) vissé dans une douille (10) d'un arceau de maintien (8) et débouchant dans l'écrou (9), raccord grâce auquel il est possible d'introduire un lubrifiant dans la zone filetée présente entre l'écrou (9) et la tige (2), **caractérisée en ce que** l'écrou (9) est susceptible d'être immobilisé et bloqué en rotation par le raccord fileté de lubrification (4).

2. Soupape selon la revendication 1, **caractérisée en ce que** la longueur de la tige filetée du raccord fileté de lubrification (4) est supérieure à l'épaisseur de la paroi de la douille (10).

3. Soupape selon la revendication 1, **caractérisée en ce que** le raccord fileté de lubrification (4) est constitué dans un matériau résistant à l'usure.

4. Soupape selon la revendication 1, **caractérisée en ce que** le raccord fileté de lubrification (4), dans sa position terminale vissée, est appuyé contre l'écrou (9).
